Europäisches Patentamt

European Patent Office

Office européen des brevets

(19)

(11) EP 1 408 597 A1

(12) EUROPEAN PATENT APPLICATION

(43) Date of publication:
14.04.2004 Bulletin 2004/16

(51) Int Cl.⁷: H02J 3/24

(21) Application number: 02405871.1

(22) Date of filing: 10.10.2002

(84) Designated Contracting States:
AT BE BG CH CY CZ DE DK EE ES FI FR GB GR
IE IT LI LU MC NL PT SE SK TR
Designated Extension States:
AL LT LV MK RO SI

(71) Applicant: ABB RESEARCH LTD.
8050 Zürich (CH)

(72) Inventors:
• Stothert, Alec
5408 Ennetbaden (CH)

• Piazzesi, Alice
5400 Baden (CH)
• Suter, Marco
5406 Rütihof (CH)

(74) Representative: ABB Patent Attorneys
c/o ABB Schweiz AG,
Intellectual Property (CH-LC/IP),
Brown Boveri Strasse 6
5400 Baden (CH)

(54) **Determining a critical number of similar units in a power network**

(57)    A method for determining a critical number of similar units (1,1') in a power network comprises the steps of

• determining a single frequency domain representation representing each of a number of similar units (1,1'),
• determining a frequency domain representation of a power grid (3)
• determining a frequency domain representation of a combined system, where the combined system comprises all the similar units (1,1') and the power grid (3), where said frequency domain representation of the combined system has the number of similar units as a parameter,
• performing a robust stability analysis of the combined system, and
• determining an upper bound on the number of similar units (1,1') for which the combined system is stable.

Fig. 1

## Description

### Field of the Invention

The invention relates to the field of power system planning. It relates to a method, computer program and data processing system for determining a critical number of similar units in a power network as described in the preamble of claim 1, 9 and 10, respectively.

### Background of the Invention

With the opening of electrical power networks to relatively small, distributed power generation units, network stability problems arise. This gives rise to the new problem of assessing network stability for the case in which a large number of similar units, in particular generating units, are connected to the network. It is desirable to determine a maximum number of similar units that may be connected without causing the network to become unstable.

Classical electrical network stability analysis focuses on the development of a set of differentiable algebraic equations. Then, stability is assumed if, i) the Jacobian of the algebraic system is invertable, i.e. if the algebraic equations have a solution, and ii) the linearised dynamic system as no positive Eigen values. This approach is primarily a trial and error method and gives no prior indication of any stability limits. Additionally such approaches require detailed modelling of the complete electrical system.

### Description of the Invention

It is therefore an object of the invention to create a method, computer program and data processing system for determining a critical number of similar units in a power network of the type mentioned initially, which overcomes the disadvantages mentioned above.

These objects are achieved by a method, computer program and data processing system for determining a critical number of similar units in a power network according to the claims 1, 9 and 10.

The inventive method thus comprises the steps of

- determining a single frequency domain representation representing each of a number of similar units,
- determining a frequency domain representation of a power source,
- determining a frequency domain representation of a combined system, where the combined system comprises all the similar units and the power source, where said frequency domain representation of the combined system has the number of similar units as a parameter,
- performing a robust stability analysis of the combined system, and

- determining an upper bound on the number of similar units for which the combined system is stable.

The upper bound on the number of similar units is therefore found explicitly by a straightforward calculation. This is in contrast to a heuristic or iterative procedure in which the number of units is varied and the stability is determined repeatedly, until a maximum number is found for which the system is still stable.

The computer program for determining a critical number of similar units in a power network according to the invention is loadable into an internal memory of a digital computer, and comprises computer program code means to make, when said computer program code means is loaded in the computer, the computer execute the method according to the invention. In a preferred embodiment of the invention, a computer program product comprises a computer readable medium, having the computer program code means recorded thereon.

A data processing system for determining a critical number of similar units in a power network according to the invention comprises means for carrying out the steps of the method according to the invention. In a preferred embodiment of the invention, the data processing system is an apparatus comprising a data processor, a memory coupled to the processor and computer program code means stored in said memory, where said computer program code means, when executed by the processor, causes the method according to the invention to be executed.

Further preferred embodiments are evident from the dependent patent claims.

### Brief Description of the Drawings

The subject matter of the invention will be explained in more detail in the following text with reference to preferred exemplary embodiments which are illustrated in the attached drawings, in which:

Figure 1 schematically shows an electrical network model;
Figure 2 shows a feedback model of the electrical network model;
Figure 3 shows a sample generator unit transfer function matrix;
Figure 4 shows a sample transmission line transfer function matrix;
Figure 5 shows an intermediate result transfer function matrix; and
Figure 6 shows a sample sequence of inverted largest singular values.

The reference symbols used in the drawings, and their meanings, are listed in summary form in the list of reference symbols. In principle, identical parts are provided with the same reference symbols in the figures.

## Detailed Description of Preferred Embodiments

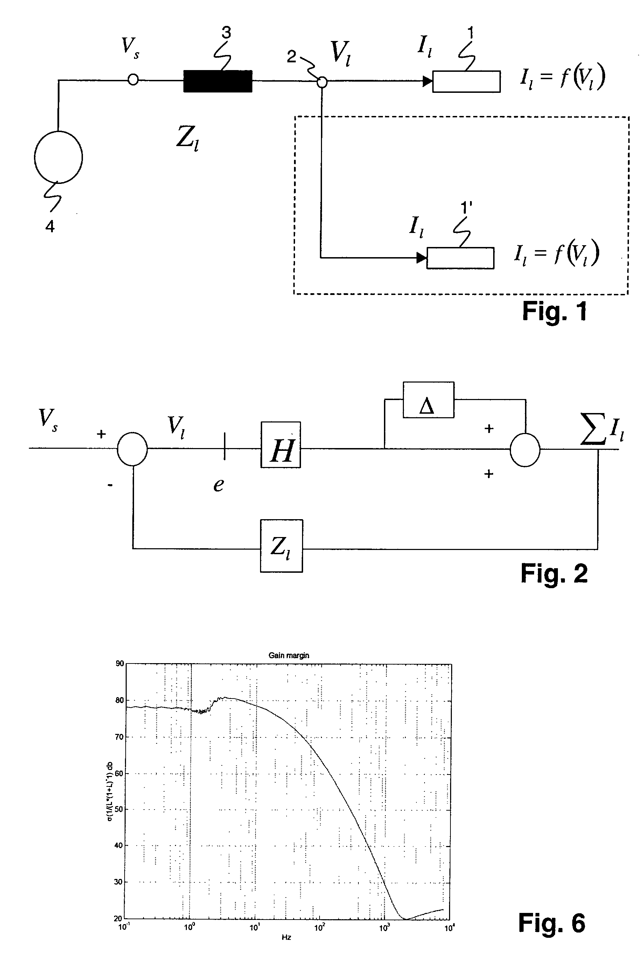

Figure 1 schematically shows an electrical network model. The model represents a number of distributed power generation (DPG) units 1,1' connected to a common bus 2 which in turn is connected through a transmission line 3 with impedance $Z_L$ to a stiff grid or power source 4. The DPG units 1,1' are similar to each other in that they show essentially the same electrical characteristics, as seen from the common bus 2. Only two DPG units 1,1' are depicted in the figure, however an arbitrary number of DPG units may be connected to the common bus 2. The object of the invention is to determine the maximum number of such DPG units in a computationally and efficient manner.

The model elements DPG unit 1, common bus 2, transmission line 3 and stiff power source 4 give an abstract representation of any actual power network that can, with reasonable accuracy, be interpreted in terms of the structure of figure 1. In a preferred embodiment of the invention, the common bus 2 is a low voltage bus, the stiff power source 4 is a medium or high voltage grid, and the transmission line impedance $Z_L$ comprises a transformer impedance. The stiff grid or power source 4 can both provide and absorb electrical power, i.e. it serves as both a power source and as a power sink, that is a source of negative power, according to circumstances. The stiff power source 4, together with the transmission line 3, represent a power grid from the point of view of the common bus 2.

In another preferred embodiment of the invention, the DPG units 1,1' are replaced by arbitrary units such as loads with nontrivial, i.e. other than ohmic load characteristics, again under the conditions that all units are similar to each other, i.e. that the electrical load behaviour of each unit can be represented by the same mathematical model.

In another preferred embodiment of the invention, the relationship expressed by the impedance $Z_L$ represents not a line 3 and stiff source 4 as shown in figure DPG unit 1, but a stiff source and an element that is representable by an impedance, such as an arbitrary power source or load with a known current to voltage characteristic.

In order to assess the stability, a combined system comprising the DPG units 1,1' and a power source or sink as represented by the transmission line 3 and the stiff power source 4 is considered. In control theoretic terms, the object is to determine whether, if there is a bounded disturbance in the voltage $V_s$ of the stiff power source 4, the current through the transmission line, or alternatively the voltage $V_l$ at the common bus 2, remains bounded. The block diagram shown in figure 2 represents the relations between the electrical variables involved in figure 1. Each of the plural DPG units 1,1' is represented by the same load or source characteristic, that is, by a voltage to current relation $I_l = f(V_l)$. In a preferred embodiment of the invention, this relation is expressed by a linear transfer function matrix $H$ that comprises transfer functions from components of the well-known dq-representation of the voltage at the unit to components of the dq-current through a unit.

The number of DPG units 1,1' is expressed by a multiplicative factor $\Delta$ representing the number of additional DPG units with respect to a single DPG unit 1. Having represented the combined system and the number of DPG units 1,1' in the manner shown, it is now possible to apply specific results from robust stability analysis. Such an analysis, for a system representation having a given structure, gives bounds on given uncertain parameters for which stability of the system is ensured. For example *M. Green and D. Limebeer, "Linear Robust Control", Prentice Hall Information and System Sciences Series, 1995*, gives an upper-bound on the size of delta that guarantees loop stability. In the present case delta is a scalar, and the stability question reduces to identifying the bounds within which delta can vary without resulting in an unstable system. The result according to the theory cited above is conservative as it allows $\Delta$ to, depending on the frequency, vary in both phase and magnitude simultaneously, whereas the present case only considers a non-frequency dependent change in magnitude. While conservative, the result is still appropriate as it is an absolute lower bound and provides an additional error of margin for e.g. modelling errors.

Following the theory cited above the critical number $\Delta$ must satisfy

$$\overline{\sigma}(\Delta) < \frac{1}{\overline{\sigma}\left(-HZ_l\left(I + HZ_l\right)^{-1}\right)}$$

or, since $\Delta$ is a scalar

$$\Delta < \frac{1}{\overline{\sigma}\left(-HZ_l\left(I + HZ_l\right)^{-1}\right)}$$

where $\overline{\sigma}(A)$ denotes the largest singular value of $A$.

Various approaches are possible for checking the above condition. In a preferred embodiment of the invention of the method according to the invention, the following steps are performed:

1) Determining the dq-voltage to dq-current input-output relationship H of the DPG units 1,1'. H is a two-by-two transfer function matrix, i.e., a frequency dependent complex valued matrix for determining the unit current $I_l$, represented in the frequency domain, from the unit voltage $V_l$, represented in the frequency domain. This step either comprises reading a computer representation of H from storage or determining H with an automatic frequency response measurement device. If the representation is read from storage, it has been determined e.g. by automatic or manual measurement or from first principles modelling.

2) Determining a two-by-two transfer function matrix $Z_{l,}$, representing the dq-current to dq-voltage input output relationship from the current $\Sigma/_l$ through the transmission line 3 to the voltage $V_l$ at the common bus 2. This is again done by either reading a computer representation from a computer storage and/or from automatically measuring or modelling the transmission line resistance and inductance.

3) Computing Eigen values of the four-by-four transfer function matrix

$$ A = \begin{bmatrix} I & -Z_l \\ -H & I \end{bmatrix} $$

with $I$ being the identity matrix, and determining whether the real part of each Eigen value is strictly negative. If this is the case, then the nominal configuration of the network with $\Delta$ equal to zero is stable. Otherwise, the nominal configuration with just one DPG unit 1 is unstable and it is not possible or sensible to connect any additional DPG units 1'.

4) Computing the two-by-two transfer function matrix

$$ B = -HZ_l(I + HZ_l)^{-1} $$

5) Repeatedly computing, with frequency varying stepwise from zero to some chosen upper bound, the value of the transfer function matrix $B$ at said frequency, which gives, for each frequency, a complex valued two-by-two matrix. For each of this set of matrices, the largest singular value is computed, and the largest singular values are collected in a vector, C, of real numbers.

6) Inverting the elements of vector C and finding the smallest value. This value is the upper bound on the number of DPG units represented by $H$ that can be connected to the common bus 2.

The method is illustrated by way of the following example:

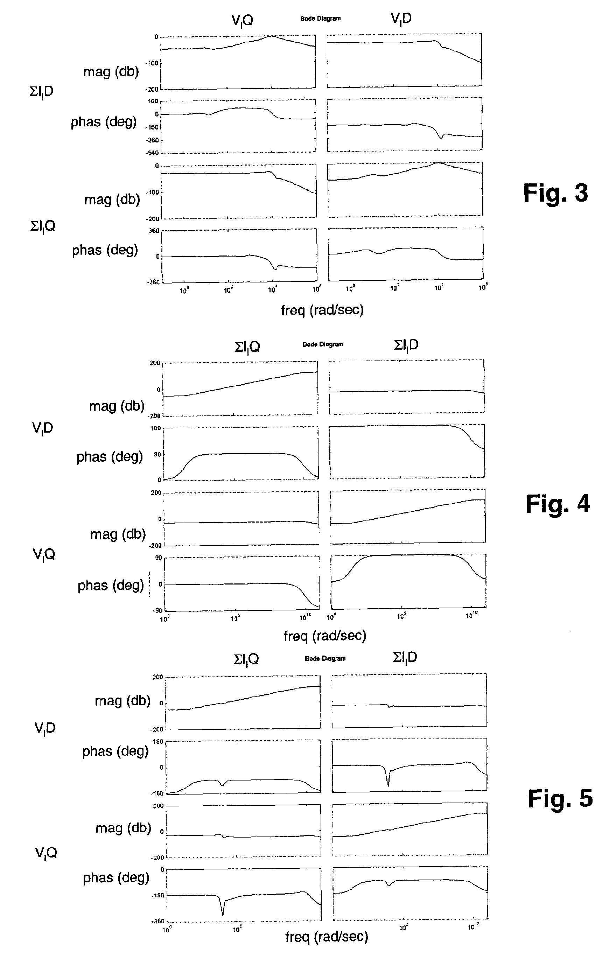

1) The transfer function matrix $H$ for a micro-turbine unit is shown using Bode diagrams in Figure 3.

2) The transfer function matrix $Z_l$ for a short, low impedance, transmission line is shown in Figure 4.

3) The Eigen values of the A matrix are calculated as (values scaled by1e-4),

- 3.8571e5
- 3.8571e5
- 2.5553 + 0.1144i
- 2.5553 - 0.1144i
- 1.5485 + 1.7142i
- 1.5485 - 1.7142i
- 1.4273 + 1.5311i
- 1.4273 - 1.5311i
- 1.0715
- 0.0305 + 0.0655i
- 0.0305 - 0.0655i
- 0.0005 + 0.0010i
- 0.0005 - 0.0010i

There are no zero or positive real components, therefore, execution of he method can continue

4) The transfer function matrix B is shown using Bode diagrams in Figure 5.

5) The collected largest singular values are inverted and shown, using a decibel y-axis scale, in Figure 6.

6) The smallest value is read off of Figure 6 giving a value of 21. Therefore an upper bound of 11 < $10^{21/20}$ additional DPG units represented by $H$ can be connected to the common bus common bus 2, giving a maximum number of 12 DPG units in total.

## List of designations

1     DPG unit
2     common bus
3     transmission line
4     stiff power source

## Claims

1. A method for determining a critical number of similar units in a power network, where each of the similar units is representable by the same electrical behaviour, **characterized in that** the method comprises the steps of

   • determining a single frequency domain representation representing each of the similar units,
   • determining a frequency domain representation of a power grid,
   • determining a frequency domain representation of a combined system, where the combined system comprises all the similar units and the power grid, said frequency domain representation of the combined system having the number of similar units as a parameter,
   • performing a robust stability analysis of the combined system, and
   • determining an upper bound on the number of similar units for which the combined system is stable.

2. Method according to claim 1, wherein the similar units are power generation units.

3. Method according to claim 1 or 2, wherein the similar units are connected to a common bus of the power network.

4. Method according to claim 3, wherein the representation of the power source represents a transmission line connecting said common bus to a stiff power source.

5. Method according to claim 3, wherein the representation of the power source represents a characteristic or one of a power source or load.

6. Method according to claim 1, wherein the upper bound on the number of similar units is a conservative estimate.

7. Method according to claim 1, wherein a representation of all the similar units is obtained as a multiplicative variation of the representation of a single one of the units.

8. Method according to claim 1, wherein the frequency domain representation representing each of the similar units, is a transfer function matrix $H$ relating unit voltage to unit current,
the frequency domain representation of the power source is a transfer function matrix $Z_l$ relating source current to source voltage,
and the upper bound on the number of similar units is determined as being the closest integer smaller than

$$\frac{1}{\overline{\sigma}\left(-HZ_l\left(I+HZ_l\right)^{-1}\right)}$$

where $\overline{\sigma}(.)$ denotes the largest singular value and $I$ an identity matrix.

9. Computer program for determining a critical number of similar units in a power network which is loadable and executable on a data processing unit and which computer program, when being executed, performs the steps according to one of the preceding claims.

10. Data processing system for determining a critical number of similar units in a power network comprising means for carrying out the steps of the method according to any one of the claims 1 to 8.

$V_s$ 3 2 $V_l$ $I_l$ 1

$I_l = f(V_l)$

$Z_l$

4

$I_l$ 1'

$I_l = f(V_l)$

**Fig. 1**

$V_s$ + $V_l$ $\Delta$ + $\sum I_l$

$H$ +

- $e$

$Z_l$

**Fig. 2**

Gain margin

**Fig. 6**

Fig. 3

Fig. 4

Fig. 5

**European Patent Office**

**PARTIAL EUROPEAN SEARCH REPORT**

**Application Number**

which under Rule 45 of the European Patent Convention EP 02 40 5871
shall be considered, for the purposes of subsequent
proceedings, as the European search report

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | "Power System Blockset 2" [Online] 2001 , MATHWORKS XP002232402 Retrieved from the Internet: <URL: https://tagteamdbserver.mathworks.com/ttserverroot/Download/2722_9490v03_PSBS_DS.pdf > [retrieved on 2003-02-21] * the whole document * --- | 1 | H02J3/24 |
| A | "Robust Control Toolbox 2.0" [Online] 1996 , MATHWORKS XP002232403 Retrieved from the Internet: <URL: https://tagteamdbserver.mathworks.com/ttserverroot/Download/240_8514v02_Robust_Cont_TBX_ds.pdf> [retrieved on 2003-02-21] * the whole document * --- | 1 | |
| A | "Simulink 5" [Online] September 2002 (2002-09) , MATHWORKS XP002232404 Retrieved from the Internet: <URL: https://tagteamdbserver.mathworks.com/ttserverroot/Download/7101_9320v03_Simulink_ds.pdf> [retrieved on 2003-02-25] * the whole document * --- -/-- | 1 | TECHNICAL FIELDS SEARCHED (Int.Cl.7) H02J |

## INCOMPLETE SEARCH

The Search Division considers that the present application, or one or more of its claims, does/do not comply with the EPC to such an extent that a meaningful search into the state of the art cannot be carried out, or can only be carried out partially, for these claims.

Claims searched completely :

Claims searched incompletely :

Claims not searched :

Reason for the limitation of the search:

see sheet C

| Place of search | Date of completion of the search | Examiner |
|---|---|---|
| MUNICH | 25 February 2003 | Lorenzo Feijoo, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C07)

**European Patent**
**Office**

INCOMPLETE SEARCH
SHEET C

Application Number

EP 02 40 5871

Claim(s) searched incompletely:
        1-10

Reason for the limitation of the search (non-patentable invention(s)):

Mathematical methods as such would be excluded from patentability by Art. 52(2)(a) in conjunction with (3) EPC.
Claims 1 to 10 relate to a mathematical method for determining maximal number of similar units that can be connected to a power network, so that power network stability is ensured.

There can be little doubt that any unit operating with electric signal can be described in mathematical terms. The characteristic of a generator, a load and the power grid, for example, can be expressed in terms of a mathematical formula (transfer function). A basic difference between a mathematical method and a technical process can be seen, in the fact that a mathematical method or a mathematical algorithm is carried out on numbers (whatever these numbers may represent, e.g. transfer functions in the frequency domain) and provides a result also in numerical form (in the present case the maximum number of similar units that can be connected to the power network without causing the network to become unstable), the mathematical method or algorithm being only an abstract concept prescribing how to operate on the numbers. No direct technical result is produced by the method as such.
In contrast thereto, if a mathematical method would be used in a technical process, that process would be carried out on a physical entity by some technical means implementing the method and would provide as its result a certain change in that entity (in the present context, in the power network topology itself), which is not the case.

Furthermore, Rule 27(1)(d) requires the description to be formulated in such a way that this technical problem can be understood. It is evident that the solution to this technical problem also mentioned in Rule 27(1)(d), must be technical as well. This is also implied by Rule 29(1)(b) which requires the mentioning of the technical features of the invention in the characterising part (i.e. in fact the technical features of the solution). This is not the case in the above mentioned claims since the technical features are missing.

## PARTIAL EUROPEAN SEARCH REPORT

European Patent Office

Application Number

EP 02 40 5871

| DOCUMENTS CONSIDERED TO BE RELEVANT | | | CLASSIFICATION OF THE APPLICATION (Int.Cl.7) |
|---|---|---|---|
| Category | Citation of document with indication, where appropriate, of relevant passages | Relevant to claim | |
| A | DJUKANOVIC M ET AL: "Application of the structured singular value theory for robust stability and control analysis in multimachine power systems. I. Framework development"<br>IEEE TRANSACTIONS ON POWER SYSTEMS, NOV. 1998, IEEE, USA,<br>vol. 13, no. 4, pages 1311-1316,<br>XP002232399<br>ISSN: 0885-8950<br>* the whole document *<br>--- | | |
| A | WANG L ET AL: "Dynamic reduction of large power systems for stability studies"<br>IEEE TRANSACTIONS ON POWER SYSTEMS, MAY 1997, IEEE, USA,<br>vol. 12, no. 2, pages 889-895,<br>XP002232400<br>ISSN: 0885-8950<br>* the whole document *<br>--- | | TECHNICAL FIELDS SEARCHED (Int.Cl.7) |
| A | LEI X ET AL: "Industrial approaches for dynamic equivalents of large power systems"<br>2002 IEEE POWER ENGINEERING SOCIETY. WINTER MEETING. CONFERENCE PROCEEDINGS. NEW YORK, NY, JAN. 27 - 31, 2002, IEEE POWER ENGINEERING SOCIETY, NEW YORK, NY: IEEE, US,<br>vol. 2 OF 2,<br>27 January 2002 (2002-01-27), pages 1036-1042, XP010578447<br>ISBN: 0-7803-7322-7<br>----- | | |

EPO FORM 1503 03.82 (P04C10)